Europäisches Patentamt

European Patent Office

Office européen des brevets

(19)

(11) Publication number: **0 055 554**

**A1**

(12) **EUROPEAN PATENT APPLICATION**

(21) Application number: **81305918.5**

(22) Date of filing: **17.12.81**

(51) Int. Cl.³: **G 02 B 5/18**

(30) Priority: **23.12.80 JP 182347/80**

(43) Date of publication of application:
**07.07.82 Bulletin 82/27**

(84) Designated Contracting States:
**DE FR GB NL**

(71) Applicant: **TOKYO SHIBAURA DENKI KABUSHIKI KAISHA**
**72, Horikawa-cho Saiwai-ku**
**Kawasaki-shi Kanagawa-ken 210(JP)**

(72) Inventor: **Takasu, Shinichiro**
**2-17-19-405, Nishiwaseda Shinjuku-ku**
**Tokyo(JP)**

(72) Inventor: **Shinozaki, Toshiaki**
**363 Shimoda-cho Kohoku-ku**
**Yokohama-shi(JP)**

(74) Representative: **Freed, Arthur Woolf et al,**
**MARKS & CLERK 57-60 Lincoln's Inn Fields**
**London WC2A 3LS(GB)**

(54) Method of fabricating a Fresnel zone plate.

(57) In a method of fabricating a fresnel zone plate, an end portion of a rod piece (29) is formed with a given diameter. Materials transparent and opaque with respect to an electromagnetic wave are alternately deposited on the rod piece (29) while the rod piece (29) is rotating, thereby to form a rod member with a multilayered structure. Each layer is uniform over the outer peripheral surface of the rod piece (29). The thickness of each layer is determined by design values of the fresnel zone plate. The rod member is inserted in a glass hollow cylinder and then the cylinder is filled with filling material. Then, the follow cylinder is sliced to form a slice piece (37). The slice piece is polished and fixed to a supporting ring (51), thereby to form a fresnel zone plate assembly (55). In the assembly 55, the slice piece (37) with a fresnel zone plate (3) supporting on a cylinder piece (53) formed by a hollow cylinder through filling material (54) is so arranged that the plate (3) is located at an opening of a through hole of the supporting ring (51), and the cylinder piece (53) is bonded to the supporting ring (51).

F I G. 8

- 1 -

## Method of fabricating a fresnel zone plate

The present invention relates to a method of fabricating a fresnel zone plate.

A fresnel zone plate serving effectively as an image forming element in a far-ultraviolet region of about 1,000 Å or less or in a soft X-ray region of about 100 Å or less, as the result of the fresnel diffraction, has recently attracted attention. Particularly of late, there is a demand developing a fresnel zone plate operable even in the short wave X-ray region of about 3 Å or less. The fields to which the fresnel zone plate is applicable are enumerated as given below:

- a) Biology
- b) Crystallography
- c) Geology, mineralogy, and ceramics
- d) Semiconductor industry

In the fields a) to c), the fresnel zone plate is applied mainly for X-ray microscopes. In the field d), it is applied for the ultra fine pattern transfer in the microlithography process required for VLSI (very large scale integrated circuits), very high speed integrated circuit, and very high frequency integrated circuit, and the like.

By convention, the fresnel zone plate has been fabricated in the following way. After a fresnel zone plate to be manufactured is determined, a radius Rl of the innermost spot zone, the number n of zone and a radius Rn of the outermost ring zone of the fresnel zone plate are calculated, and a magnified image of the fresnel zone plate is depicted on the basis of the result of the calculation. With a mask of the magnified image, the reduction printing is performed to form a fresnel zone plate with a desired size.

The fabricating method, however, involves the following problem. The width Bn of the outermost ring zone Bn is restricted at most 0.5 μm by resolution limit of an optical system used. Even if the most advanced electronic beam exposure system is used for depicting the zone, the width Bn of the outermost ring zone obtained is 0.2 μm maximum. This value is rarely obtained by improving the present electron beam exposure system to some extent. Since the ordinary electron beam exposure machines have the orthogonal drawing scheme, a curve given by the polar coordinates can not be depicted at a high accuracy. Therefore, in order to directly depict the fresnel zone at a high accuracy, the exposure system must have an additional unit for generating another function to depict the zone or a mechanism for rotating a target to be depicted. For this reason, it is said that it is difficult to substantially form a fresnel zone plate even by the electron beam exposure system.

Accordingly, an object of the present invention is to provide a method of fabricating a fresnel zone plate which can provide a sufficient small outermost zone width.

According to the present invention, a fresnel zone plate can be obtained from a slice piece formed by slicing a multilayered rod. The multilayered rod is formed by depositing a rod piece with two kind of materials, while the rod piece being rotated. The thickness of each layer is uniformly formed over the peripheral surface of the rod. In a preferred embodiment, the one of the materials is transparent with respect to an electromagnetic wave, while the other material is opaque with respect to the same. In another preferred embodiment, the etching rates of the first and second materials are different and one of the materials is removed from the slice piece by the etching process. In yet another embodiment, the refractive indices of the two kind of materials are different and the slice piece is formed to have a given thickness depending on both the refractive indices.

This invention can be more fully understood from the following detailed description when taken in conjunction with the accompanying drawings, in which:

Fig. 1 is a plan view illustrating a fresnel zone plate;

Fig. 2 is a schematic diagram illustrating the principle of a system containing the fresnel zone plate shown in Fig. 1;

Fig. 3 is a schematic diagram of a distribution analyzing system incorporating the fresnel zone plate shown in Fig. 1;

Fig. 4 is a schematic diagram of an ordinary X-ray transfer system;

Fig. 5 is a schematic diagram illustrating an X-ray reducing transfer system incorporating the fresnel zone plate shown in Fig. 1;

Fig. 6 is a schematic diagram illustrating a system for fabricating a fresnel zone plate according to an embodiment of the present invention;

Fig. 7 is a front view illustrating the rod piece shown in Fig. 6;

Fig. 8 is a cross sectional view of a fresnel zone plate assembly with a fresnel zone plate formed by the system shown in Fig. 6; and

0055554

- 4 -

Fig. 9 is a cross sectional view of a fresnel zone plate assembly with another type of the fresnel zone plate formed by the system shown in Fig. 6.

Before describing a method of fabricating a fresnel zone plate, description will be made of the fresnel zone plate, systems which use the fresnel zone plate and which is used in various field, and design specification of the fresnel zone plate which are required for these systems will be given.

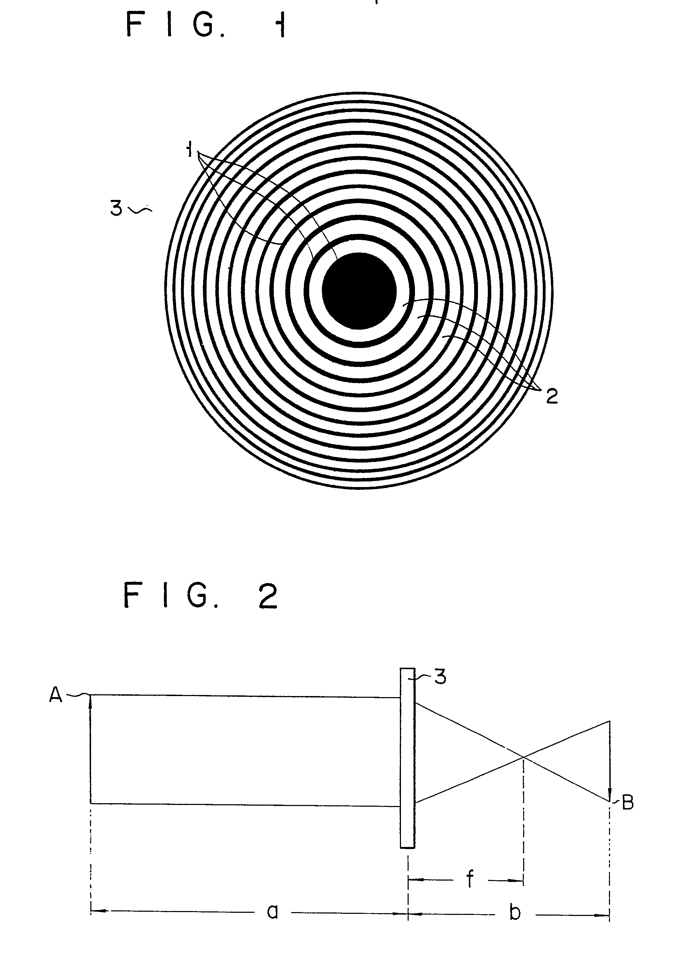

Referring to Fig. 1, there is shown an application example of the fresnel zone plate 3. The fresnel zone plate 3 has shield regions or zones 1 with extremely high absorption coefficients with projected electromagnetic wave, e.g. X-rays or light rays and transmissive regions or zones 2 with extremely small absorption coefficients with respect to the electromagnetic wave. The shielding zones 1 and the transmissive zones 2 are alternately and coaxially disposed. In another type of the fresnel zone plate, a zone 1 with a large refractive index and another zone with a small refractive index are contained. The thickness of the fresnel zone plate is so set at a value to produce a phase difference of $\lambda/2$ between the electromagnetic waves which are passed through the zones 1 and 2, respectively, where $\lambda$ is the wavelength of the electromagnetic wave. In any type of the fresnel zone plate, the radius Rn and the width Bn of the nth zone counted from the center of the fresnel zone plate 3 are given by the following equations

$$Rn = \sqrt{n} \cdot \sqrt{f \cdot \lambda}$$
$$Bn = \sqrt{f \cdot \lambda} (\sqrt{n+1} - \sqrt{n} \qquad \} \quad \cdots\cdots (1)$$

where $\lambda$ is the wavelength of the electromagnetic wave and f is a constant.

When the fresnel zone plate 3 is arranged as shown in Fig. 2, the electromagnetic waves or the light rays

- 5 -

0055554

emitted from a point A are focused into a point B. If assuming that the distances from the fresnel zone plate 3 to the points A and B are a and b, the following relation holds:

$$1/a + 1/b = 1/f \qquad \ldots\ldots (2)$$

The relation given by the equation (2) is similar to the imaging formula of a positive lens. Thus, the fresnel zone plate functions like a positive lens. Accordingly, the fresnel zone plate 3, like the lens, has the following relation among an effective F number $F_e$, a minimum width W of resolution in the imaging system, and the wavelength $\lambda$:

$$W = 1.22 \ F_e \ \lambda \qquad \ldots\ldots (3)$$

Some examples of the applications of the fresnel zone plate in some fields will be described. In the field of biology, it is well known that the major components of the nucleus of the cell and the cell membrane are carbon, nitrogen, hydrogen, etc. However, in some case, precise information about a distribution of inorganic metal material as impurity infinite smally contained in the cell is required. It is very difficult to obtain the distribution by the analysis technique at the present stage. In the field of crystallography, it is important to analyze unnecessary heavy metal which tends to be accumulated in the crystal defect. Nevertheless, the distribution analysis has insufficiently been developed with its poor resolution, although its importance is recognized. In the fields of geology and mineralogy, there are demands to analyze an action of impurity in the crystal boundary, crystallization in natural glass material, and a distribution of impurity in the crystal nucleus. The same demands are also found in the field of ceramics. In the fields of biology, crystallography, geology, mineralogy and ceramics, the magnification must be several to several thousands times, and the resolution must be on the order of submicron or less.

When a distribution analyzing method with the magnification of ×100 and with a resolution of 0.5 μm is developed, and an image is formed on a photographic plate for atomic nucleuses, a distribution analysis of 100 Å or less at 10,000 times is possible with the optical magnification of 100 times. According to the conventional optical method, a resolving power is limited to about the wavelength used because of the diffraction effect of optical elements. Therefore, the resolution of 100 Å or less could not be obtained. In a radiograph using X-rays or radio isotope, a specimen and a photographic plate are made to intimately contact with each other, and its image is not magnified. Therefore, a good resolution could not been obtained. According to the analysis by an electron prove micro-analysis method, electrons is dispersed after injected into a specimen. Further, according to an ion beam micro-analysis, it is difficult to control a high density fine ion beam. The resolution in the distribution analysis at the present stage is poor, 1 to 5 μm. Accordingly, it has been desired to develop a fresnel zone plate applicable for the distribution analysis.

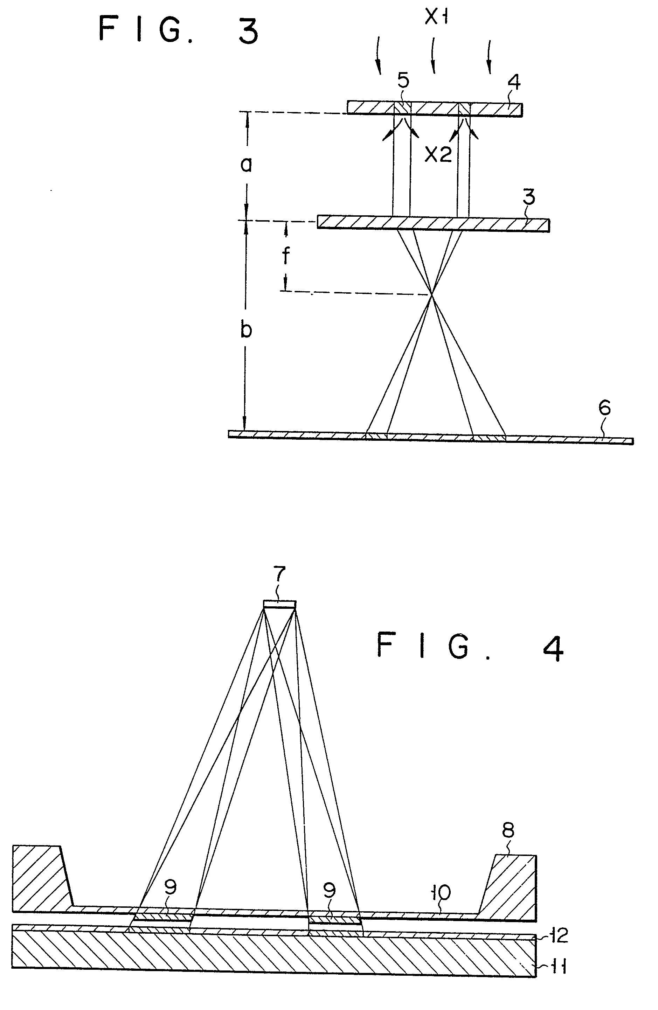

Fig. 3 schematically shows of a distribution analyzing system using a fresnel zone plate. A primary X-rays X2 is radiated in order to cause the impurity aggregation to radiate the secondary fluorescent X-rays X2. The secondary fluorescent X-rays X2 generated from the impurity aggregation 5 are imaged on X-ray resist 6 in a magnifying manner, through a fresnel zone plate 3. If it is assumed that the distances from the fresnel zone plate 3 to a specimen 4 and the X-ray resist 6 are a and b, and a focal length of the fresnel zone plate 3 is f,

$$b/a = m = 100 \quad (m: \text{ magnification})$$
$$a = 1.01 \, f$$
$$b = ma = 1.01 \, mf.$$

Therefore, if f = 3 mm, a = 3.03 mm and b = 3.03 mm, and the system has a proper size in a practical use. Assuming that the wavelength of the secondary fluorescent X-rays X2 is 8 Å, the effective F number F value necessary for the fresnel zone plate 3 is nearly equal to 10, i.e. Fe = 10, deriving from the equation (3). When the wavelength is 2 Å, Fe = 41. An outline of the fresnel zone plate can be grasped on the basis of these values.

In the lithography process applied for the semiconductor field, an image of 0.1 to 0.2 μm must be transferred onto a target. This type of the transfer system currently used is as shown in Fig. 4. The transfer system is comprised of a mask pattern 9 formed by a member for shielding X-rays from an X-ray source 7 and a mask 8 formed by a holding member 10 holding a mask pattern 9. The X-rays from the X-ray source 7 is projected through the mask 8 onto an X-ray resist on a target, i.e. an Si substrate 11. In this case, the resolution depends on a limit in manufacturing the mask pattern 9 and the flatness of an Si substrate 11. In principle, this system can perform a fine pattern transfer since the wavelength used is short. Practically, however, it is very difficult to depict a mask pattern with a line width which is smaller than 0.2 to 0.3 μm, depending on an ability of the electron beam exposing system for preparing the mask pattern 9.

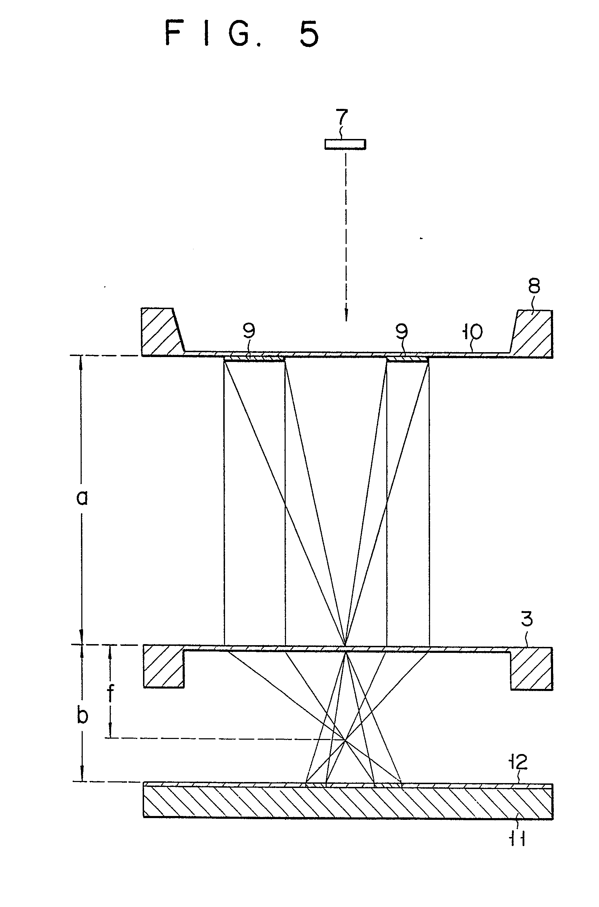

For this reason, a reducing transfer system as shown in Fig. 5 is preferably employed in the lithography process in the field of semiconductor. In this system, a fresnel zone plate 3 is disposed between a mask 8 and a specimen 1, and a mask pattern 9 is reduced and imaged on the resist on a specimen 11.

In this case, if it is assumed that the distances from the fresnel zone plate 3 to the mask 8 and the specimen 11 are a and b,

$$a/b = m = 3 \text{ to } 20$$
$$b = 4 f \text{ to } 21 f$$
$$a = (4/3) \times f \text{ to } 1.05 \, f$$

If $f = 10$ cm, $b = 4$ to $210$ cm and $a = 13$ to $10.5$ cm and the system has a practical size. Further, when the wavelength is 8 Å and the desired resolution is 100 Å, the equation (3) provides $Fe = 10$. Similarly, when the desired resolution is 800 Å, $Fe = 82$. These values provides an outline of the desired fresnel zone plate 3.

In this way, an out line of the desired fresnel zone plate 3 can be obtained in accordance with the present desire. The general design of the reducing transfer system will be described. Assuming that a focal distance of the fresnel zone plate 3 is f, and the wavelength used is $\lambda$, the innermost spot zone radius Rl is

$$Rl = \sqrt{f \cdot \lambda} \qquad \ldots \ldots (4).$$

Assuming that a desired resolution width is W, the effective F number is Fe, and the number of the zones in the fresnel zone plate is n,

$$Fe = 1/2\sqrt{\frac{f}{n \cdot \lambda}} \qquad \ldots \ldots (5)$$

$$W = 1.22 \, Fe \cdot \lambda = 0.61\sqrt{f \cdot \lambda / n} = 0.61\frac{Rl}{\sqrt{n}} \qquad \ldots (6).$$

The outermost ring zone radius Rn is

$$Rn = \sqrt{n \cdot f \cdot \lambda} = \sqrt{n} \cdot Rl = \frac{W}{0.61}n \qquad \ldots \ldots (7)$$

$$n = \frac{0.61 Rn}{W} \qquad \ldots \ldots (8).$$

From the equation (6), we have

$$n = \frac{0.3721 Rl}{W^2} = \frac{0.3721 f \cdot \lambda}{W^2} \qquad \ldots \ldots (9).$$

The width of the outermost ring zone width Bn when the n is sufficiently large is approximately given

$$Bn = \frac{R1}{2\sqrt{n}} = \frac{1}{2}\sqrt{\frac{f \cdot \lambda}{n}} = \frac{W}{1.2^2} \qquad \cdots \cdots (10).$$

A change $\Delta f$ of the focal point with respect to a change of the wavelength $\Delta\lambda$ is expressed

$$\frac{\Delta f}{f} = \frac{\Delta\lambda}{\lambda} \qquad \cdots \cdots (11).$$

The numerical values of the major specifications of the fresnel zone plate is described in table, which are calculated by using the above relations.

| X-rays | $CK\alpha$ | $CK\alpha$ | $CK\alpha$ | $CK\alpha$ | $A\ell K\alpha$ | $SiK\alpha_{12}$ | $CuK\alpha_{12}$ | $MoK\alpha_{12}$ |
|---|---|---|---|---|---|---|---|---|
| Target | C | C | C | C | $A\ell$ | Si | Cu | Mo |
| Wavelength $\lambda$ (Å) | 44.8 | 44.8 | 44.8 | 44.8 | 8.339 | 7.126 | 1.542 | 0.71 |
| Lens characteristics | | | | | | | | |
|    Focal length f (mm) | 100 | 10 | 10,000 | 2,000 | 3 | 5 | 10 | 3 |
|    Expected resolution width W (µm) | 1 | 0.1 | Resolving power $\sin\theta$ min $= 10^{-6}$ | 0.1 | 0.05 | 0.05 | 0.05 | 0.02 |
| Design values | | | | | | | | |
|    Innermost spot zone radius R1 (µm) | 20.976 | 6.633 | 209.76 | 93.81 | 1.581 | 1.887 | 1.241 | 0.461 |
|    Number of ring zones n | 163 | 1637 | 163 | 327448 | 372 | 530 | 229 | 198 |
|    Outermost ring zone width Bn (µm) | 0.819 | 0.0819 | 8.19 | 0.0819 | 0.0410 | 0.0410 | 0.0410 | 0.0164 |
|    Outermost ring zone diameter Rn (µm) | 268.6 | 268.6 | 2686 | 53680 | 30.53 | 43.45 | 18.8 | 6.49 |
|    F number | 186 | 18.6 | 1861 | 18.6 | 49.1 | 57.2 | 265 | 230 |

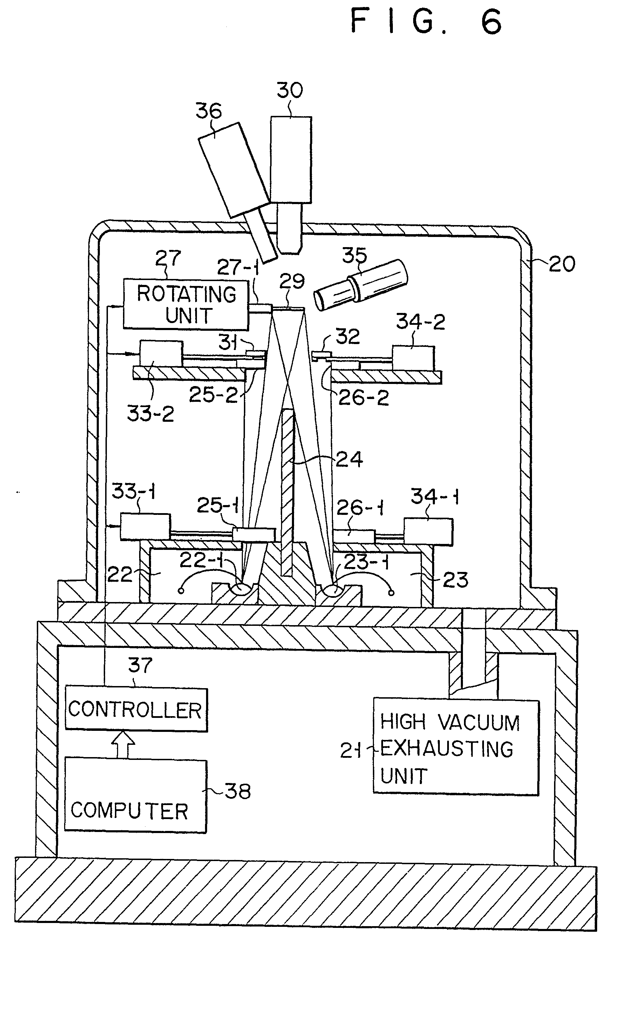

A method of fabricating the fresnel zone plate 3 and a system for fabricating the same in accordance with the above table will be described referring to Figs. 6 to 9. In the system, disposed within a vacuum housing 20 are first and second evaporation sources 22 and 23, and a rod piece 29 on which evaporation materials 22-1 and 23-1 in the first and second evaporation sources 22 and 23 are alternately deposited. The vacuum housing 20 is coupled with a high vacuum exhausting unit 21, and evacuated to $10^{-7}$ Torr or less, preferably $10^{-8}$ Torr or less, for example, $3 \times 10^{-9}$ Torr. In the present embodiment, the first and second evaporation materials 22-1 and 23-1 are respectively opaque and transparent with respect to the electromagnetic wave used in the system incorporating the fresnel zone plate 3. For example, in the fresnel zone for converging the X-rays, the first and second evaporation materials 22-1 and 23-1 are Au and Be, respectively. The rod piece 29 made of material opaque with respect to the electromagnetic wave is shaped a column or a cone. The rod piece 29 is axially mounted to a rotating shaft 27-1 of a rotating unit 27 so as to rotate about its axis. The rotating unit 27 is coupled with a controller for adjusting the number of rotations of the rotating unit 27. A separation plate 24 is provided in the housing 20 for separating the flow of vapor particles vaporized from the first and second evaporation sources 22 and 23. Shutters 25-1 and 25-2, and 26-1 and 26-2 are provided for both the flow paths of vapor particles for preventing vapor particles from flowing toward the rod piece 29. The shutters 25-1 and 25-2 are shifted by shutter shifting units 33-1 and 33-2 interlocked therewith, respectively. Likewise, the shutters 26-1 and 26-2 are shifted by shutter shifting units 34-1 and 34-2 interlocked therewith, respectively. The shutter shifting units 33-1, 33-2, 34-1 and 34-2 are so controlled by a controller 37 that the shutters 25-1 and 25-2 are located in the corresponding vapor particles path for shielding the vapor particles flow, the shutters 26-1 and 26-2 are removed from the corresponding vapor particles path, and vice versa. Film thickness meters 31 and 32, for example, of the crystal resonator type are respectively mounted to the shutters 25-2 and 26-2 for monitoring the thickness of layers deposited on the rod piece 29. The detecting signal from the meters 31 and 32 are applied through an interface (not shown) to a microcomputer 38. The housing 20 is further provided with a mass spectrometer 30 for monitoring the type of the vapor particles deposited on the rod piece 29 and an ion source 36 for generating ion beams for etching to adjust the diameter of the rod piece 29. The signal from the mass spectrometer 30 is inputted through an interface to the computer 38, and the ion source 36 is controlled by the controller 37. An objective section of a measuring microscope 35 for monitoring a diameter of the rod piece 29 is located in the housing 20. The observing and measuring sections (not shown) of the microscope 35 are located outside of the housing. The measured values are supplied through the interface to the computer 38. When the diameter of the rod piece 29 is very small, e.g. 2 to 5 µm, an electron microscope of the SEM type may be used in place of the measuring microscope. The computer 38 applies the control data to the controller 37 on the basis of the input data and the controller 37 controls the units 27, 33-1, 33-2, 34-1, 34-2 and 36 on the basis of the control data.

In using the system as mentioned above, the following points must be considered. As described above, the evaporation sources are provided to alternately depositing the evaporation materials around the rod piece 29. In this case, the thickness of one layer deposited around the rod piece 29 must be uniform. In other words, the vapor particles must be uniformly deposited around the rod piece 29. To satisfy this requisition, the system rotates the rod piece 29 by the rotating unit 27. It is preferable that the rotating speed is as high as possible. However, there is a limit in increasing the rotating speed in a high vacuum, from a technical view point. Further, the high speed rotation to such an extent that the deposition of the vapor particles fails, should be avoided. In this respect, an experiment showed that when the width of the outermost zone of the fresnel zone 29 is Bn, the thickness of a layer formed for one rotation of the rod piece is preferably 1/100 or less of the width Bn. On this fact, it is estimated that when the width Bn of the outermost zone is 1 $\mu$m and a thickness of the layer deposited, for unit time, on the surface of a test piece not rotated, that is, a deposition rate, is 20 Å/sec, the rod piece must be rotated at 12 rpm or more, preferably 20 rpm or more, not several tens thousands rpm. When the width Bn of the outermost zone is small, it is necessary to relatively increase the rotating speed of the rod piece 29 or reducing the deposition rate.

To secure the uniform deposition of the layers around the rod piece 29, the polycrystalline layers are not preferable because of their surface irregularity. Generally, the polycrystalline layers are formed depending on the temperature of the rod piece 29. Therefore, the rod piece 29 are preferably maintained at a sufficiently lower temperature than an epitaxial growing temperature. Most preferably, the vapor particles should be deposited on the rod piece 29 in an amorphous condition. Such deposition must be performed at a low temperature, e.g. 3·to 4°K for vanadium and 15 to 25°K for bismuth.

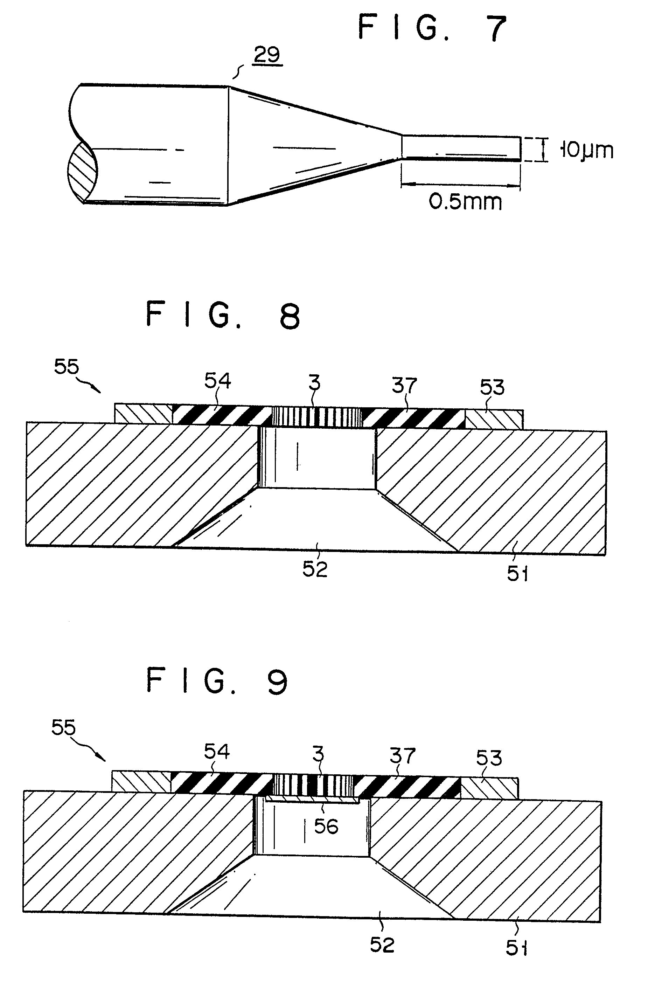

The system shown in Fig. 6 fabricates the fresnel zone plate 3 in the following way. Assume that Au is used for the opaque material, i.e. the first evaporation material 22-1, and Be for the transparent material, e.g. the second evaporation material 22-2. A tungsten wire with a diameter of 1 mm is used for the rod piece 29. The diameter of one end of the tungsten wire is reduced to about 10 µm over a range of about 0.5 mm, as shown in Fig. 7 by the machining or the chemical etching. The rod piece 29 is mounted to the shaft 27-1 of the rotating unit 27 and the housing 20 is exhausted to a high degree of vacuum. The ion source 36 produces oxygen ions to etch the rod piece 29 to reduce the diameter Rl of the end portion equal to the diameter of the inner zone, while the diameter of the end portion of the rod piece 29 rotated at 300 rpm by the rotating unit 27 is observed by the microscope 35. When the focal distance f of the fresnel zone plate 3 is set at 1 cm with respect to AℓKα X-rays, the radius Rl of the innermost zone has the following value in accordance with the equation (4):

$$Rl = \sqrt{8.339 \times 10^{-4} \times 1 \times 10^4} = 2.887 \ \mu m$$

After the rod piece 29 is etched to have the above-mentioned diameter, the shutters 25-1 and 25-2 are closed while the rod piece 29 is rotating at 100 rpm. At the same time, the shutters 26-1 and 26-2 are opened, so that only the first evaporation material 23-1, i.e. Be, is deposited on the end portion of the rod piece 29 in a thickness of 1.196 µm. In the next step, the shutters 25-1 and 25-2 are opened, while the shutters 26-1 and 26-2 are closed, and the second evaporation material 22-1, i.e. Au, is deposited on the end portion of the rod piece 29 in a thickness of 0.918 µm. Simiarly, the first and second evaporation materials 23-1 and 22-1 are alternately deposited on the end portion of the rod piece 29 in the order of 0.7738, 0.6163 and 0.4955 μm for Be and 0.6817, 0.5668 and 0.4955 μm for Au. Finally, Au is deposited in the thickness of 0.0456 μm as the 1,000th layer.

The rod piece 29 with the alternately deposited Au and Be layers in the above-mentioned manner is removed from the shaft 27-1 of the rotating unit 27. Then, it is axially inserted into a hollow cylinder with a diameter of 5 mm made of glass or metal. Then, the hollow cylinder with the rod piece 29 is filled with low - welding point alloy such as Au-Si alloy or Pb-Sn alloy or epoxy resin or welder glass, thereby to form a rod member. A section of the rod member containing the end portion of the rod piece 29 is sliced with a given thickness to form disc-like slice pieces 37. The slice pieces 37 are polished to have a mirror surface and is bonded to a glass plate by organic adhesive. The slice piece 37 is polished up to 20 μm in thickness and is bonded to the disc frame. The disc frame, as shown in Fig. 8, is comprised of a supporting ring 51 made of metal, and filling material such as gypsum, sulfur, wood and alloy, which is easily welded out after it is filled into a hole 52 of the ring 51, and the bonding surface of the slice piece is polished to have a mirror surface. After the slice piece 37 is bonded to the disc frame, the glass plate is removed and the slice piece 37 is again polished in a similar way to have the thickness of 10 μm or less, preferably about 5 μm. Subsequently, the filling material in the disc frame is removed, finally to obtain a fresnel zone plate assembly 55 fixed to the supporting ring 51. To complete the assembly 55, the surface of the fresnel zone plate 3 of the assembly 55 is smoothed by the ion beams to have the thickness of 1 to 0.5 μm. As shown in Fig. 8, the fresnel zone plate 3 is located at the opening of the through hole 52 of the supporting ring 51, and is supported by the cylinder piece 53 as the hollow cylinder, through the filling member 54. The filling material 54 and the cylinder piece 53 are bonded to the supporting ring 52.

The fresnel zone plate thus formed has the following specifications:

1. Focal distance f = 10 mm for AℓKα X-rays with 8.339 Å

2. Effective F number Fe = 110

3. Resolution width W = 0.11 μm

In our experiment, the zone plate was disposed in opposition to an object with a = 10.10 mm and the object was irradiated with a 8.4 Å monochromatic light separated from SOR radiation. An image of the object of 100 magnification was formed on a photographic plate distanced 1,010 mm from the object. Since the resolution of the photographic plate is 1 μm, the object can satisfactorily be analyzed.

When SiKα X-rays with 7.126 Å was used for the zone plate, its focal distance was 11.70 mm. An Au mask for very high frequency integrated circuit was prepared magnified 20 times on an Si substrate with a thickness of 2 μm. An arrangement was made such that a distance a from the mask to the zone plate is 245.7 mm and a distance b from the zone plate to the X-ray resist is 12.285 mm. With this arrangement, the resist is exposed to the Kα X-rays emitted from the Si rotary anode. Our check of the resolution width showed that the line width of 0.25 μm was successfully resolved. Since the mask pattern providing the 0.25 μm line width has the size of 5.0 μm, the fabrication of the mask pattern was very easy.

As described above, in the fabricating method according to the present invention, the rod like specimen 29 with a desired diameter is mounted to a rotating shaft of the rotating means 27 so as to rotate the specimen about the axis of the shaft. By the combination of the first and second evaporation sources 22 and 23, the shutters 25-1, 25-2, 26-1 and 26-2, and the film thickness meters 31 and 32, the materials with large and small absorption coefficients with respect to the electromagnetic wave used in the system are alternately deposited on the peripheral surface of the specimen 29, with given thicknesses. Then, it is cut along the surface perpendicular to the axis to have slice pieces. The zone plate with the outermost ring zone width Bn of about 100 Å can be fabricated easily and accurately. Therefore, the fresnel zone plate with the resolution width of 0.1 μm or less optimally of 100 Å, which can not be attained by the prior art. This means also that the fresnel zone plate is applicable for various fields. For fabricating the fresnel zone plate, any specially designed, additional means is not necessary, but a combination of the usual deposition device, the rotating device and the like is merely required. The entire of the slice piece may be used as the fresnel zone plate, so that the time taken for one fresnel zone plate to be manufactured is reduced and the fabricating cost is reduced.

A second embodiment of the present invention will be described. In the embodiment, a fresnel zone plate with a focal distance of 10 mm fitted for CKα soft X-rays with a wavelength of 44 Å, which is used for the study of biology and X-ray lithographic technology, will be fabricated. The fresnel zone plate is fabricated by the system shown in Fig. 6. Solid materials which are stable and transparent with respect to the 44 Å, CKα soft X-rays are Be, C and B, for example. In the present embodiment, a gap zone is used for the transparent zone 2 of the fresnel zone plate 3 and the opaque zone 1 is made of Si. A radius

R1 and a diameter D1 of the inner zone have the following values in accordance with the equation (4).

$$R1 = \sqrt{4.4 \times 10^{-3} \times 1 \times 10^4} = 6.6333 \ \mu m$$

$$D1 = 13.2665 \ \mu m$$

When the resolution width as a design value is 0.1 $\mu m$, the following specifications are given

$$\text{Number of zones } n = \frac{0.3721 \times 10^4 \times 4.4 \times 10^{-3}}{(-0.1)^2} = 1683$$

Width of the outermost zone Bn = 0.08196 $\mu m$

Radius of the outermost zone Rn = 263.5 $\mu m$

Width of outermost zone Dn = 0.5369 mm Effective F number Fe = 18.6

As in the above-mentioned embodiment, one end portion of the rod piece made of Si with a diameter of 1 mm is subjected to the machining and the chemical etching over a range of about 0.5 mm to be reduced to 0.05 mm in diameter. The rod piece 29 is mounted to the shaft 27-1 of the rotating unit 27. And its diameter is reduced up to 13.27 $\mu m$ by the oxygen ion beam. Si is used for the first evaporation material 22-1 and Ge for the second evaporation material 23-1. The Ge particles and Si particles are alternately deposited on the end portion of the rod piece 29 at room temperature. Through the deposition, the (2n+1)th (n = 1, 2, ...) layer of Ge and the (2n+2)th layer of Si are alternately deposited on the rod piece 29. At this time, the thickness of each layer is so controlled by the computer 38 that it is determined by the following equation with the diameter of the inner zone R1 = 6.6333.

$$Bn = (\sqrt{n+1} - \sqrt{n}) \ R1 = 6.633(\sqrt{n+1} - \sqrt{n})$$

After the 1,638th layer is deposited, the deposition process is completed. Then, the rod piece 29 is inserted into the hollow cylinder and planted in the filling material, as described above. And it is sliced to have the thickness of about 0.5 mm. One of the surfaces of the slice piece 37 is polished to have a mirror surface and the rod piece 37 is bonded at the polished surface to a glass plate by organic adhesive. After this, the other surface of the slice piece is polished like the mirror surface to such an extent to have the thickness of about 0.1 mm. Following this, a thin rhodium layer is deposited and patterned to form radial beams for holding the zones and the beam thickness is then increased up to 10 μm by the electrolytic plating process. The slice piece 37 with the holding beams 56 are fixed to a disc frame including the supporting ring 51 made of platinum, and sulfur filled in a hole 53 with 2 mm in diameter of the supporting ring. The holding beam 56 of the slice piece 37 are made to intimately contact with the sulfur surface and their peripheral surfaces are bonded to the supporting ring. The glass plate previously mounted is removed from the slice piece 37 fixed to the disc frame. The surface of the slice piece where the glass plate had been mounted is well polished up to 20 μm in thickness. The region of the fresnel zone plate 3 of the slice piece 37 is chemically etched up to 2 μm in thickness. When the volume ratio of HF, $HNO_3$ and CHCOOH of the etchant is properly selected, the etching of the Ge zone in the region of the fresnel zone plate 3 progresses at high rate. The etchant must be dilute so that the etching speed is several μm/min or less. The residual Ge left can completely be etched away by the oxygen ion beam. After the Ge is completely removed, the sulfur is completely removed from the disc frame by carbon disulfide. Accordingly, the Si zone 1 opaque with respect to the X-rays is supported by the holding beams. Gap zones 2 transparent with respect to X-rays are provided among Si zones 2. The fresnel zone plate 3 region comprised of those zones is

0055554

- 20 -

supported by the cylinder piece 53, so that a fresnel zone plate assembly 55 with the cylinder piece 53 bonded to the supporting ring 51 is completed.

As described above, the present embodiment uses Ge and Si for forming the fresnel zone plate. It is for this reason that both the materials are comparable with each other in hardness and brittleness and therefore neither material is damaged when machine.

In the first embodiment, the fresnel zone plate is made of the materials transparent and opaque with respect to the electromagnetic wave. In the second embodiment, the fresnel zone plate has zones with gaps among the materials opaque to the electromagnetic wave. It should be understood that the above-mentioned embodiments do not limit the present invention in any way. For example, in the fresnel zone plate, the zones are made of materials with different refractive indices, with properly selected thicknesses. Alternatively, a first group of zones of the fresnel zone plate are made of material with a refractive index, while a second group of zones are made of gaps and the thickness of the plate is properly selected.

While the above-mentioned embodiments employ X-rays for the electromagnetic wave rays used in association with the fresnel zone plate, longer wave rays such as far-ultraviolet, ultraviolet, visible, and infrared rays may also be used for the same purpose. In the region of the longer wavelength such as visible and infrared rays, the outer zone width Bn in the fresnel zone plate is increased. For depositing the first and second materials on the rod piece, the chemical vapor deposition process (CVD), the spraying process, the electrodeposition process, or the like may be used in addition to the vacuum deposition process.

Having described specific embodiments of our bearings, it is believed obvious that modification and variation of our invention is possible in the light of the above teachings.

Claims:

1. A method of fabricating a fresnel zone plate characterized by comprising the steps of:

preparing a rod piece (29) with a given diameter;

forming a rod element of the coaxial multilayered structure by alternately depositing first and second materials on the surface of said rod piece (29) while said rod piece (29) is rotating; and

forming a slice piece (37) by slicing said rod element.

2. The method according to claim 1, characterized in that said first material is transparent with respect to electromagnetic wave, and said second material is opaque with respect to said electromagnetic wave.

3. The method according to claim 1, characterized in that said first and second materials have different refractive indices, and said slice piece (37) is formed with a given thickness dependent on both said refractive indices.

4. The method according to claim 1, characterized in that said first and second materials have different etching rates with respect to etchant, and said method further comprising the step of fixing said slice piece (37) to layer holding beams (56); and the step of removing said first material by etching said slice piece (37) fixed to said holding beams (56).

5. The method according to claim 1, characterized in that said rod piece (29) is cylindrical.

6. The method according to claim 1, characterized in that said rod piece (29) in conical.

7. The method according to claim 1, characterized in that said first and second materials are deposited on said rod piece (29) by a vapor deposition in vacuum.

8. The method according to claim 1, characterized in that said step for preparing said rod (29) includes the step for reducing the diameter of said rod (29) being rotating to a given value in an ion beam.

9. The method according to claim 1, characterized by further comprising the step of planting said rod element (29) in said hollow cylinder filled with filling material (54), and the step for slicing said rod element together with said hollow cylinder and said filling material.

10. The method according to claim 1, characterized by further comprising the step for polishing said slice piece (29) to a given value in thickness.

11. The method according to claim 1, characterized by further comprising the step of fixing said slice piece (29) to a supporting member (51) with a hole (52).

F I G. 1

F I G. 2

F I G. 3

F I G. 4

# F I G. 5

F I G. 6

# FIG. 7

29

10µm

0.5mm

# FIG. 8

55

54  3  37  53

52  51

# FIG. 9

55

54  3  37  53

56

52  51

0055554

European Patent
Office

**EUROPEAN SEARCH REPORT**

Application number

EP 81 30 5918

| Category | Citation of document with indication, where appropriate, of relevant passages | Relevant to claim |
|---|---|---|
| X | DE - A - 1 805 058 (F. KANTOR)<br>* Page 18 - page 22; figures 8, 11 * | 1-7 |
| X | GB - A - 2 017 331 (N.E.C.)<br>* Abstract; figures 1,5 * | 1 |

## DOCUMENTS CONSIDERED TO BE RELEVANT

**CLASSIFICATION OF THE APPLICATION (Int. Cl. 3)**

G 02 B 5/18

**TECHNICAL FIELDS SEARCHED (Int.Cl. 3)**

G 02 B 5/18

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 01-04-1982 | PFAHLER |

EPO Form 1503.1  06.78